# EUROPEAN PATENT SPECIFICATION

(11) **EP 4 258 455 B1**
(45) Date of publication and mention of the grant of the patent: **29.10.2025**
(21) Application number: 22767487.6
(22) Date of filing: 08.03.2022
(51) Int. Cl.: H01M 50/538, H01M 10/04, B21D 11/10, B21D 11/20, H01M 50/533, H01M 50/531

(54) **FOIL TAB FORMING APPARATUS AND FOIL TAB FORMING METHOD**
VORRICHTUNG UND VERFAHREN ZUR HERSTELLUNG VON FOLIENLASCHEN
APPAREIL DE FORMAGE DE LANGUETTE DE FEUILLE ET PROCÉDÉ DE FORMAGE DE LANGUETTE DE FEUILLE

(30) Priority: 08.03.2021 KR 20210030278; 15.10.2021 KR 20210137853
(43) Date of publication of application: 11.10.2023
(73) Proprietor: LG Energy Solution, Ltd., Seoul 07335 (KR)
(72) Inventor: LIM, Jae-Won, Daejeon 34122 (KR); KIM, Hak-Kyun, Daejeon 34122 (KR); PARK, Jong-Sik, Daejeon 34122 (KR); LEE, Je-Jun, Daejeon 34122 (KR)
(74) Representative: Goddar, Heinz J.
(86) International application number: PCT/KR2022/003284
(87) International publication number: WO 2022/191591

(56) References cited:
- JP-A- 2000 040 502
- JP-A- 2001 118 562
- JP-A- 2006 310 254
- JP-A- 2008 262 898
- KR-B1- 100 599 710
- US-A1- 2006 024 572
- US-A1- 2006 240 323

## Description

### TECHNICAL FIELD

The present disclosure relates to a foil tab forming apparatus and a foil tab forming method.

The present application claims priority to Korean Patent Application No. 10-2021-0030278 filed on March 8, 2021, Korean Patent Application No. 10-2021-0137853 filed on October 15, 2021 in the Republic of Korea.

### BACKGROUND ART

A structure, in which a tab of a strip shape connecting an electrode assembly and an external terminal is welded and connected to an electrode uncoated portion of the electrode assembly, has been applied to a cylindrical secondary battery of the prior art, but according to such a structure, there are issues that a current path is limited and self-resistance of the electrode assembly is high.

In order to resolve these issues, a method of increasing the number of tabs connected to the electrode assembly has been attempted, but application of such a method still causes a limit. In order to resolve these issues, using a positive electrode uncoated portion and a negative electrode uncoated portion provided respectively at a top portion and a bottom portion of the electrode assembly as tabs may be considered. In other words, a method of realizing an electric connection by using a positive electrode foil tab and a negative electrode foil tab respectively extending upward and downward in parallel to an extending direction of a winding center axis of the electrode assembly may be considered.

As such, when the positive electrode uncoated portion and the negative electrode uncoated portion having shapes respectively extending to the top portion and the bottom portion of the electrode assembly are used as the tabs, the positive electrode uncoated portion and the negative electrode uncoated portion may be considered to be bent so as to increase a combining area with a current collection plate.

Patent publication US 2006/024572, of 2 February 2006, discloses an apparatus for forming tab foils using rotating rods.

Patent publication US2006/240323, of 26 October 2006, discloses pressing tab foils into shape with a shaped block.

Accordingly, development of a forming apparatus facilitating a process of bending the positive electrode uncoated portion and the negative electrode uncoated portion of the electrode assembly, and a forming method using the forming apparatus is required.

### DISCLOSURE

### Technical Problem

The present disclosure is designed to solve the problems of the related art, and therefore the present disclosure is directed to facilitating a process of forming a positive electrode foil tab and/or a negative electrode foil tab of an electrode assembly.

Also, the present disclosure is directed to uniformly forming a positive electrode foil tab and/or a negative electrode foil tab of an electrode assembly throughout an entire region from an outer circumferential portion of the electrode assembly to a winding center portion of the electrode assembly.

However, the technical problems to be solved in the present disclosure are not limited to the above, and other problems that are not mentioned could be clearly understood by one of ordinary skill in the art from the description of the present disclosure below.

### Technical Solution

**In** one aspect of the present disclosure, there is provided a foil tab forming apparatus for forming a foil tab of an electrode assembly that includes an outer circumferential portion and a winding center portion defining a winding axis, the foil tab forming apparatus comprising: a forming jig configured to press the foil tab by moving along a direction parallel to the winding axis of the electrode assembly.

The foil tab forming apparatus may further comprise a pre-forming jig configured to bend the foil tab by pressing the foil tab, while moving in a direction from the outer circumferential portion of the electrode assembly to the winding center portion of the electrode assembly.

The forming jig may be configured to press the foil tab that has been primarily bent by the pre-forming jig.

The pre-forming jig may comprise a plurality of shutter blocks disposed along a circumference of the outer circumferential portion of the electrode assembly and bending the foil tab by moving along a direction facing the winding center portion of the electrode assembly.

The shutter block may have a surface facing the foil tab, the surface having an upward inclined shape along a direction from the outer circumferential portion of the electrode assembly to the winding center portion.

The forming jig may have a width equal to or greater than a diameter of the electrode assembly.

The forming jig may be configured to rotate based on the same axis as the winding axis of the electrode assembly.

The forming jig may be configured to rotate in a clockwise direction or in a counterclockwise direction.

The forming jig may be configured to simultaneously perform an operation of pressing the foil tab and an operation of rotating.

The forming jig may have a surface facing the foil tab, the surface having an upward inclined shape along a direction from the outer circumferential portion of the electrode assembly to the winding center portion.

The forming jig may comprise: a first pressing block provided at a location corresponding to a first region of the foil tab, the first region being relatively adjacent to the outer circumferential portion of the electrode assembly; and a second pressing block provided at a location corresponding to a second region of the foil tab, the second region being relatively adjacent to the winding center of the electrode assembly.

A pressing surface of the first pressing block and a pressing surface of the second pressing block may have the same inclination and define a surface of the forming jig facing the foil tab.

The first pressing block and the second pressing block may be configured to be independently movable along a direction parallel to the winding axis of the electrode assembly.

The forming jig may be configured to perform primary pressing as the first pressing block and the second pressing block move together towards the foil tab while the pressing surface of the first pressing block and the pressing surface of the second pressing block form the same plane, and then perform secondary pressing as the second pressing block moves further towards the foil tab while a location of the first pressing block is maintained.

The forming jig may be configured such that, after the primary pressing and the secondary pressing are completed, a lowest portion of the second pressing block is located at a height equal to or higher than a lowest portion of the first pressing block.

The first pressing block and the second pressing block may be configured to rotate independently or together based on the same axis as the winding axis.

The forming jig may comprise: a first pressing block provided at a location corresponding to a first region of the foil tab, the first region being relatively adjacent to the outer circumferential portion of the electrode assembly; a third pressing block provided at a location corresponding to a third region of the foil tab, the third region being relatively adjacent to the winding center portion of the electrode assembly; and a second pressing block provided at a location corresponding to a second region of the foil tab, the second region being located between the first region and the third region.

The forming jig may be provided as a pair of forming jigs disposed at both opposite ends of the electrode assembly along the winding axis of the electrode assembly.

The pair of forming jigs may rotate in opposite directions based on the same axis as the winding axis of the electrode assembly.

The pre-forming jig may be provided as a pair of pre-forming jigs disposed at both opposite ends of the electrode assembly along the winding axis of the electrode assembly.

**In** another aspect of the present disclosure, there is also provided a foil tab forming method for forming a foil tab of an electrode assembly that includes an outer circumferential portion and a winding center portion defining a winding axis, the foil tab forming method comprising steps of: (S1) bending the foil tab by pressing the foil tab along a direction parallel to the winding axis of the electrode assembly by using a forming jig.

The foil tab forming method may further comprise: (S0) bending the foil tab by pressing the foil tab in a direction from the outer circumferential portion of the electrode assembly to the winding center portion of the electrode assembly by using a pre-forming jig, prior to the step (S1).

The step (S1) may be a step of additionally bending the foil tab by pressing the foil tab that has been pre-formed according to the step (S0).

The step (S0) may be performed by using the pre-forming jig including a plurality of shutter blocks disposed along a circumference of the outer circumferential portion of the electrode assembly and bending the foil tab by moving along a direction facing the winding center portion of the electrode assembly.

The step (S0) may be performed by using the pre-forming jig including the plurality of shutter blocks having a surface facing the foil tab, the surface having an upward inclined shape along a direction from the outer circumferential portion of the electrode assembly to the winding center portion.

The step (S1) may be performed by using the forming jig having a width equal to or greater than a diameter of the electrode assembly.

The step (S1) may be performed by using the forming jig configured to rotate based on the same axis as the winding axis of the electrode assembly.

The step (S1) may be performed by using the forming jig configured to simultaneously perform an operation of pressing the foil tab and an operation of rotating.

**In** the step (S1), the forming jig may rotate in a clockwise direction so that the foil tab is oriented in the clockwise direction.

**In** the step (S1), the forming jig may rotate in a counterclockwise direction so that the foil tab is oriented in the counterclockwise direction.

The step (S1) may be performed by using the forming jig having a surface facing the foil tab, the surface having an upward inclined shape along a direction from the outer circumferential portion of the electrode assembly to the winding center portion.

The step (S1) may be performed by using the forming jig comprising a first pressing block provided at a location corresponding to a first region of the foil tab, the first region being relatively adjacent to the outer circumferential portion of the electrode assembly, and a second pressing block provided at a location corresponding to a second region of the foil tab, the second region being relatively adjacent to the winding center of the electrode assembly.

The step (S1) may be performed by using the forming jig in which a pressing surface of the first pressing block and a pressing surface of the second pressing block have the same inclination.

The step (S1) may be performed by using the forming jig configured such that the first pressing block and the second pressing block are independently movable along a direction parallel to the winding axis of the electrode assembly.

The step (S1) may comprise steps of: (S11) performing primary pressing as the first pressing block and the second pressing block move together towards the foil tab while the pressing surface of the first pressing block and the pressing surface of the second pressing block form the same plane; and (S12) after the step (S11) is performed, performing secondary pressing as the second pressing block further moves towards the foil tab while a location of the first pressing block is maintained.

After the step (S11) and the step (S12) are performed, a lowest portion of the second pressing block may be located at a height equal to or higher than a lowest portion of the first pressing block.

The step (S1) may be performed as the first pressing block and the second pressing block rotate together or independently based on the same axis as the winding axis.

The step (S1) may be performed by using the forming jig comprising a first pressing block provided at a location corresponding to a first region of the foil tab, the first region being relatively adjacent to the outer circumferential portion of the electrode assembly, a third pressing block provided at a location corresponding to a third region of the foil tab, the third region being relatively adjacent to the winding center portion of the electrode assembly, and a second pressing block provided at a location corresponding to a second region of the foil tab, the second region being located between the first region and the third region.

The step (S1) may be performed by using the forming jig in which a pressing surface of the first pressing block, a pressing surface of the second pressing block and a pressing surface of the third pressing block have the same inclination.

The step (S1) may comprise steps of: (S11) performing primary pressing as the first pressing block, the second pressing block and the third pressing block move together towards the foil tab while the pressing surface of the first pressing block, the pressing surface of the second pressing block and the pressing surface of the third pressing block form the same plane; (S12) after the step (S11) is performed, performing secondary pressing as the second pressing block and the third pressing block move towards the foil tab while the pressing surface of the second pressing block and the pressing surface of the third pressing block form the same plane and a location of the first pressing block is maintained; and (S13) after the step (S12) is performed, performing tertiary pressing as the third pressing block moves towards the foil tab while a location of the first pressing block and a location of the second pressing block are maintained.

The step (S1) may be performed by using the forming jig provided as a pair of forming jigs disposed at both opposite ends of the electrode assembly along the winding axis of the electrode assembly.

The step (S1) may be performed by rotating the pair of forming jigs in opposite directions based on the same axis as the winding axis of the electrode assembly.

The step (S0) may be performed by using the pre-forming jig provided as a pair of pre-forming jigs disposed at both opposite ends of the electrode assembly along the winding axis of the electrode assembly.

### Advantageous Effects

According to the present disclosure, a process of forming a positive electrode foil tab and/or a negative electrode foil tab of an electrode assembly can be facilitated.

In addition, according to the present disclosure, a positive electrode foil tab and/or a negative electrode foil tab of an electrode assembly can be uniformly formed throughout an entire region from an outer circumferential portion of the electrode assembly to a winding center portion of the electrode assembly.

However, the technical problems to be solved in the present disclosure are not limited to the above, and other problems that are not mentioned could be clearly understood by one of ordinary skill in the art from the description of the present disclosure below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1 and 2 are views showing an electrode assembly, in which forming of a foil tab is completed by a foil tab forming apparatus, and a current collection plate combined to the foil tab, according to an embodiment of the present disclosure.
FIG. 3 is a view for describing an operation of a pre-forming jig configuring a foil tab forming apparatus, according to an embodiment of the disclosure.
FIG. 4 is a view showing a forming jig configuring a foil tab forming apparatus, according to an embodiment of the disclosure.
FIG. 5 is a view for describing an operation of a second pressing block included in the forming jig shown in FIG. 4.
FIG. 6 is a view for describing primary pressing performed by the forming jig shown in FIG. 4.
FIG. 7 is a view for describing secondary pressing performed by the forming jig shown in FIG. 4.
FIG. 8 is a view for describing a forming process by a forming jig configuring a foil tab forming apparatus, according to another embodiment of the present disclosure.
FIGS. 9 and 10 are views showing exemplary forms of the forming jig of the present disclosure.
FIG. 11 is a view showing an orientation form of the foil tab formed by the forming jig of the present disclosure rotating in a counterclockwise direction.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

A foil tab forming apparatus of the present disclosure is an apparatus configured such that at least one foil tab of a positive electrode foil tab and a negative electrode foil tab provided respectively at a top portion and a bottom portion of a jelly-roll type electrode assembly is easily formed.

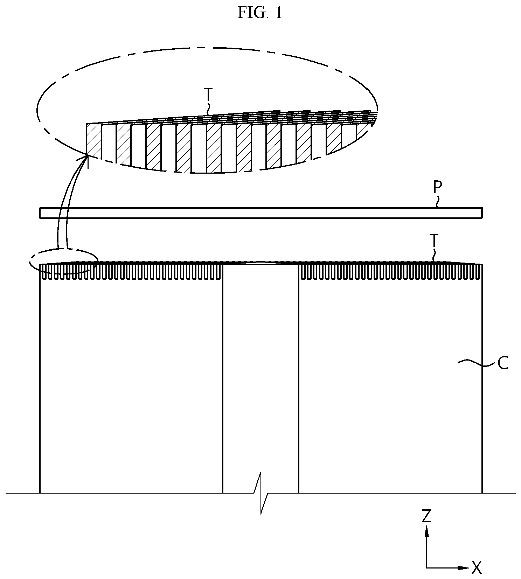

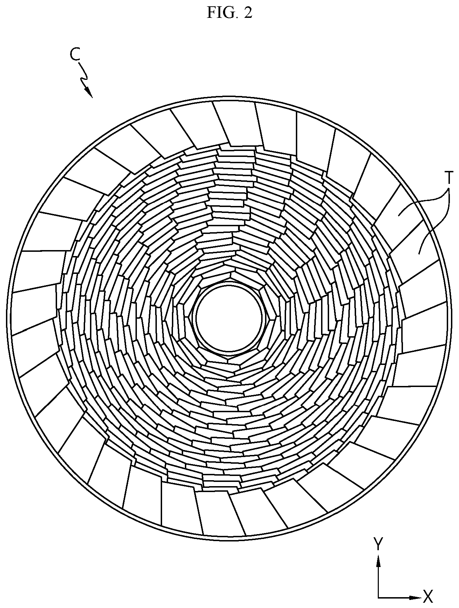

Referring to FIGS. 1 and 2, a structure of a foil tab T formed by the foil tab forming apparatus of the present disclosure is illustrated. The foil tab T refers to a first electrode uncoated portion extending upward along a direction parallel to a winding axis of an electrode assembly C (a direction parallel to a Z-axis of FIG. 1) and/or a second electrode uncoated portion extending downward (the direction parallel to the Z-axis of FIG. 1). The electrode assembly C has a structure in which a stack including a first electrode, a second electrode, and a separation film interposed between the first electrode and the second electrode is wound based on the winding axis. In the present specification, an example in which the first electrode is a positive electrode and the second electrode is a negative electrode will be described. The positive electrode includes a positive electrode uncoated portion formed in an end portion at one side in a width direction based on the stack before winding, and the negative electrode includes a negative electrode uncoated portion formed in an end portion at another side in the width direction based on the stack before winding. When the stack including the positive electrode and the negative electrode is wound to form the electrode assembly C, the positive electrode uncoated portion (a positive electrode active material uncoated region) is provided at an upper end portion of the electrode assembly C and the negative electrode uncoated portion (a negative electrode active material uncoated region) is provided at a lower end portion thereof.

An aluminum foil may be used as an electrode plate constituting the positive electrode, and a copper foil may be used as an electrode plate constituting the negative electrode. Thus, in the present specification, the positive electrode uncoated portion and the negative electrode uncoated portion will be each referred to as the foil tab T. The positive electrode foil tab and the negative electrode foil tab have shapes extending upward and downward of the electrode assembly C, respectively, i.e., shapes extending in opposite directions.

A current collection plate P is combined to the foil tab T. In order to improve a combining force between the current collection plate P and the foil tab T and reduce electric resistance at a combining portion, it is necessary to form a combining interface as flat as possible to widen a combining area between the foil tab T and the current collection plate P as much as possible. In this regard, the foil tab T may be bent such that an end portion of the foil tab T extends in a direction parallel to the current collection plate P. For smoothness of the bending, one foil tab continuously formed from a winding center portion to an outermost side of the electrode assembly may be, for example, notched as shown in FIG. 2 to a plurality of segments and then bend the foil tab.

The foil tab forming apparatus of the present disclosure is characterized in that the foil tab is configured to be smoothly and uniformly bent throughout a region from the outer circumferential portion of the electrode assembly C to the winding center portion.

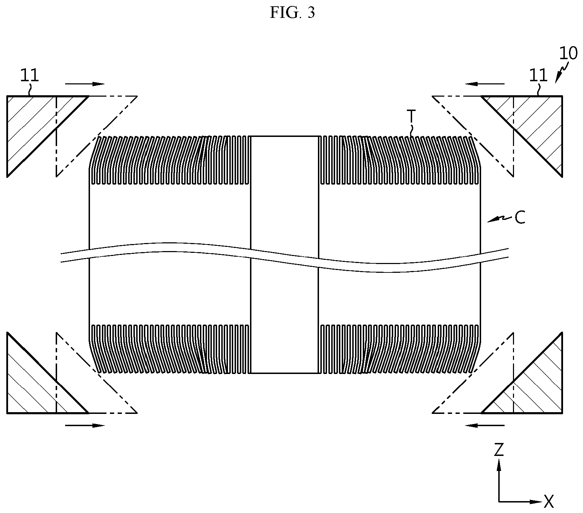

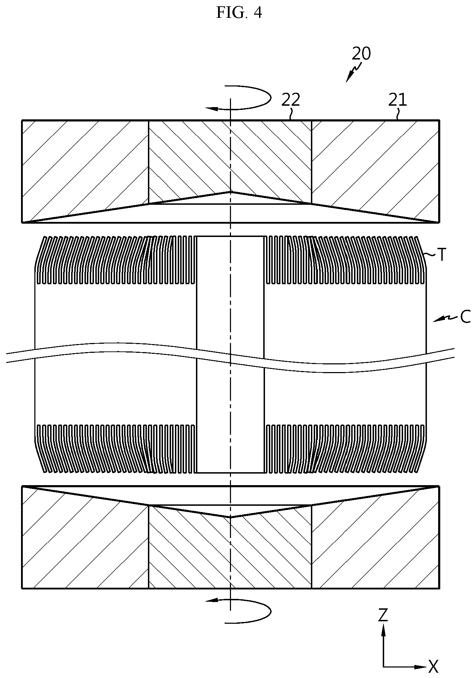

Referring to FIGS. 3 and 4, the foil tab forming apparatus is an apparatus for forming the at least one foil tab T of the positive electrode foil tab and the negative electrode foil tab respectively provided at the top portion and the bottom portion of the electrode assembly C. The foil tab forming apparatus may include a forming jig 20 configured to form the foil tab T, and may further include a pre-forming jig 10 configured to perform pre-forming before the foil tab T is formed by the forming jig 20. In this specification, the foil tab forming apparatus of the present disclosure is described on the premise that it includes both the pre-forming jig 10 and the forming jig 20, but unlike this, the foil tab forming apparatus of the present disclosure may also be configured not to include the pre-forming jig 10. Even in this case, as explained later, the forming jig 20 of the present disclosure may be configured to perform intensive forming with a time interval for each area of the foil tab T, so that uniform and accurate forming may be performed over the entire area of the foil tab T.

Referring to FIG. 3, the pre-forming jig 10 is configured to press and bend the foil tab T while moving in a direction from the outer circumferential portion of the electrode assembly C to the winding center portion of the electrode assembly C. The pre-forming jig 10 may be provided as a pair of pre-forming jigs 10 respectively disposed at both opposite ends of the electrode assembly C along the winding axis of the electrode assembly C. The pre-forming jig 10 may include a plurality of shutter blocks 11. The plurality of shutter blocks 11 are disposed along a circumference of the outer circumferential portion of the electrode assembly and configured to bend the foil tab T while moving along a direction facing the winding center portion of the electrode assembly C. The shutter block 11 may have a surface facing the foil tab T, the surface having an upward inclined shape along the direction from the outer circumferential portion of the electrode assembly C to the winding center portion of the electrode assembly C. That is, each shutter block 11 may have a surface inclined upward such that the thickness of the shutter block 11 decreases from the outside to the inside.

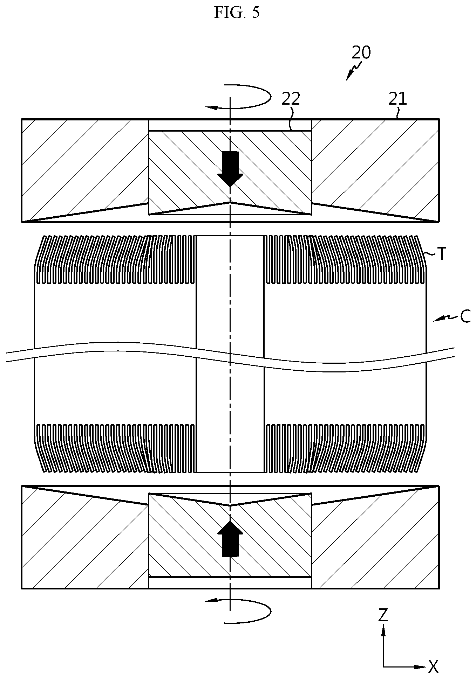

Referring to FIGS. 4 and 5 together with FIG. 3, the forming jig 20 is configured to press the foil tab T that has been completely pre-formed by the pre-forming jig 10, by moving along a direction parallel to the winding axis of the electrode assembly C. The forming jig 20 may have, for example, a shape approximately similar to a cylinder. The forming jig 20 may be provided as a pair of forming jigs respectively disposed at both opposite ends of the electrode assembly C along the winding axis of the electrode assembly C.

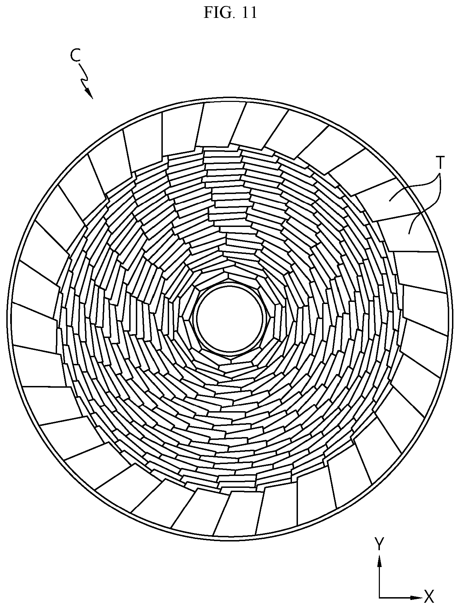

The forming jig 20 may have a width equal to or greater than a diameter of the electrode assembly C. This is to form all of an entire region of the foil tab T during the pressing performed by using the forming jig 20. The forming jig 20 may be configured to rotate based on the same axis as the winding axis of the electrode assembly C. If the forming jig 20 is provided in a pair and respectively provided at both ends of the electrode assembly C in the height direction (parallel to the Z-axis), the pair of forming jigs 20 may rotate in opposite directions. The forming jig 20 may be configured to simultaneously perform an operation of pressing the foil tab T and an operation of rotating. When the pressing and rotation are performed together, more smooth and natural bending is possible. If the rotation direction of the forming jig 20 is a clockwise direction, the foil tab T may be oriented in the clockwise direction (see FIG. 2). Conversely, if the rotation direction of the forming jig 20 is a counterclockwise direction, the foil tab T may be oriented in the counterclockwise direction (see FIG. 11).

The forming jig 20 may have a surface facing the foil tab T, the surface having an upward inclined shape along the direction from the outer circumferential portion of the electrode assembly C to the winding center portion. That is, the forming jig 20 may have a surface inclined upward so that the thickness of the forming jig 20 decreases from the outside to the center. According to such a structure of the forming jig 20, a phenomenon, in which the electrode assembly C is damaged due to excessive force applied to the foil tab T when the foil tab T is pressed, may be prevented, and natural bending may be achieved.

The forming jig 20 may include a first pressing block 21 and a second pressing block 22. The first pressing block 21 is provided at a location corresponding to a first region of the foil tab T, the first region being relatively adjacent to the outer circumferential portion of the electrode assembly C. The second pressing block 22 is provided at a location corresponding to a second region of the foil tab T, the second region being relatively adjacent to the winding center of the electrode assembly C. For example, when the forming jig 20 has a shape approximately similar to a cylinder, the first pressing block 21 may have a shape similar to a cylinder having an empty center portion, and the second pressing block 22 may be disposed in the empty center portion of the first pressing block 21.

A pressing surface of the first pressing block 21 and a pressing surface of the second pressing block 22 may have an approximately same inclination. In this case, the pressing surface of the first pressing block 21 and the pressing surface of the second pressing block 22 may form an approximately same plane. That is, the pressing surface of the first pressing block 21 and the pressing surface of the second pressing block 22 may be connected to each other to define a surface of the forming jig 20 facing the foil tab T.

The first pressing block 21 and the second pressing block 22 may be configured to be independently movable along a direction parallel to the winding axis of the electrode assembly C (a direction parallel to the Z-axis). For example, as shown in FIG. 5, the second pressing block 22 may additionally move in a direction facing the foil tab T while the first pressing block 21 is stopped.

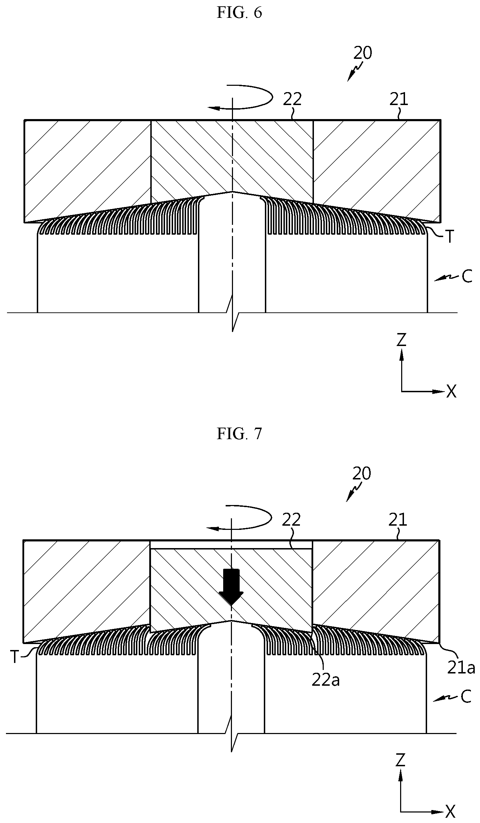

Referring to FIGS. 6 and 7, the forming jig 20 may be configured such that first pressing block 21 and the second pressing block 22 perform the primary pressing by moving towards the foil tab T together, while the pressing surface of the first pressing block 21 and the pressing surface of the second pressing block 22 form the same plane. Also, the forming jig 20 may be configured such that the second pressing block 22 performs the secondary pressing by further moving towards the foil tab T while a location of the first pressing block 21 is maintained, after the primary pressing is performed. As such, when the forming jig 20 includes the plurality of pressing blocks 21 and 22 and performs additional pressing by using the pressing block 22 located closer to the center portion, more elaborate forming may be achieved. Due to an inclined direction of the pressing surface of the forming jig 20, a bending point of the foil tab T moves towards an end portion of the foil tab T in a direction from the outer circumferential portion of the electrode assembly C to the winding center portion, during the pressing. Accordingly, when the additional pressing is performed by using the second pressing block 22, a deviation of such a bending point may be reduced.

Meanwhile, the forming jig 20 may be configured such that, after the primary pressing and the secondary pressing are completed, a lowest portion 22a of the second pressing block 22 is located at a height equal to or higher than a lowest portion 21a of the first pressing block 21. This is because, when the pressing by the second pressing block 22 is excessively deeply performed, a bending location deviation at a boundary point between the first pressing block 21 and the second pressing block 22 may become too big.

The first pressing block 21 and the second pressing block 22 may be configured to rotate independently or together based on the same axis as the winding axis of the electrode assembly C. In other words, the first pressing block 21 and the second pressing block 22 may be connected to one driving means and rotate together, or may be connected to separate driving means respectively and rotate independently.

The first pressing block 21 and the second pressing block 22 may move towards the foil tab T while the pressing surfaces thereof form an approximately same plane to bend the foil tab T (primary forming) through pressing and rotation, and then perform additional bending (secondary forming) through additional pressing and rotation, by using the second pressing block 22 while a rotation state of the first pressing block 21 is maintained. The first region of the foil tab T may be intensively formed by the primary forming. Of course, while the first region is intensively formed, the second region may also be formed together. In addition, the second region of the foil tab T may be intensively formed by the secondary forming. While the second region is intensively formed, the first region may also be continuously formed.

Whether or not the remaining region is continuously formed while any one of the first region and the second region is intensively formed may be determined according to the location of the forming jig 20 in the vertical direction (direction parallel to the Z-axis).

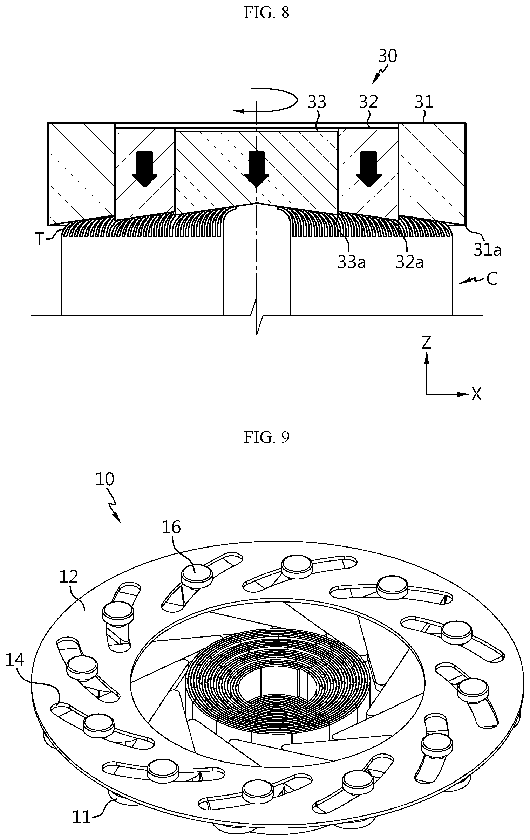

Meanwhile, referring to FIG. 8, unlike the forming jig 20 shown in FIGS. 4 through 7, a forming jig 30 including three pressing blocks 31, 32, and 33 is illustrated. However, the number of pressing blocks 21 and 22, or 31, 32, and 33 included in the forming jig 20 or 30 is not limited to 2 or 3, and a greater number of pressing blocks may be provided for more elaborate forming.

The first pressing block 31 may be provided at a location corresponding to a first region of the foil tab T, the first region being relatively adjacent to the outer circumferential portion of the electrode assembly C. The third pressing block 33 may be provided at a location corresponding to a third region of the foil tab T, the third region being adjacent to the core side, namely the winding center portion, of the electrode assembly C. The second pressing block 32 may be provided at a location corresponding to a second region of the foil tab T, the second region being located between the first region and the third region. The pressing surfaces of the first pressing block 31, the second pressing block 32 and the third pressing block 33 may have approximately the same inclination. Accordingly, the inclined surfaces of the first pressing block 31, the second pressing block 32 and the third pressing block 33 may define a surface of the forming jig 30 facing the foil tab T.

As shown in FIG. 8, when the forming jig 30 includes a first pressing block 31, a second pressing block 32, and a third pressing block 33, the three pressing blocks 31, 32, and 33 may form the foil tab T (primary forming) by moving and rotating towards the foil tab T while pressing surfaces thereof form an approximately same plane. The first region of foil tab T may be intensively formed by the primary forming. Of course, while the first region is being intensively formed, the second region and the third region may also be formed together. After the primary forming is completed as above, the second pressing block 32 and the third pressing block 33 may similarly perform pressing and rotation by additionally moving while maintaining a state in which the pressing surfaces thereof form the approximately same plane, thereby forming the foil tab T (secondary forming). The second region of the foil tab T may be intensively formed by the secondary forming. Here, a rotating state of the first pressing block 31 may be continuously maintained, and thus the first region and the third region may also be continuously formed while the second region is intensively formed. The third pressing block 33 may perform pressing and rotation by additionally moving after the additional pressing is performed by the second pressing block 32, thereby forming the foil tab T (tertiary forming). The third region of the foil tab T may be intensively formed by the tertiary forming. At this time, rotating states of the first pressing block 31 and the second pressing block 32 may be continuously maintained, and thus the first region and the second region may also be continuously formed while the third region is intensively formed.

Whether or not the remaining regions are continuously formed while any one of the first region, the second region and the third region is intensively formed may be determined according to the location of the forming jig 20 in the vertical direction (direction parallel to the Z-axis).

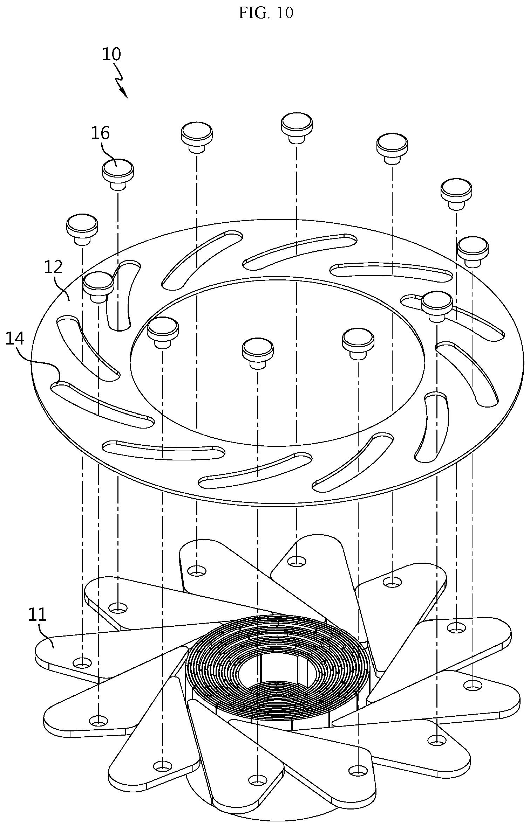

Referring to FIGS. 3, 9 and 10, an exemplary form of the pre-forming jig 10 is shown. The pre-forming jig 10 may include, for example, a shutter frame 12 having a plurality of slots 14. Each shutter block 11 may be supported by a guide member 16 extending through the slot 14, inside the corresponding slot 14. The guide member 16 may move inside the slot 14 as the shutter frame 12 rotates based on an axis parallel to the winding axis of the electrode assembly C. The slot 14 may have a curved shape so that the shutter block 11 may easily move toward and away from the winding axis of the electrode assembly C. The overall movement of the shutter block 11 may be similar to, for example, opening and closing of the iris. That is, the shutter block 11 may be coupled to the shutter frame 12 and configured to perform a closing operation for moving toward the electrode assembly C and an opening operation for moving away from electrode assembly C, which is disposed in an empty space formed at the center of the shutter frame 12. Meanwhile, the shutter block 11 may be opened/closed by rotation of the shutter frame 12, or may be opened/closed by moving the guide member 16 in the extending direction of the slot 14.

Next, a foil tab forming method of the present disclosure will be described. The foil tab forming method of the present disclosure is a method of forming the foil tab T of the electrode assembly C by using the foil tab forming apparatus of the present disclosure described above.

Referring to FIGS. 3 through 8 that have been referred to above, the foil tab forming method of the present disclosure is a method of forming the at least one foil tab T of the positive electrode foil tab and the negative electrode foil tab respectively provided at the top portion and the bottom portion of the electrode assembly C.

The foil tab forming method is a method of forming a foil tab T of an electrode assembly C having an outer circumferential portion and a winding center portion defining a winding axis, and includes the step of (S1) bending the foil tab T by pressing the foil tab T along a direction parallel to the winding axis of the electrode assembly C by using a forming jig 20. The foil tab forming method may further include the step of (S0) bending the foil tab T by pressing the foil tab T in a direction from the outer circumferential portion of the electrode assembly C toward the winding center portion of the electrode assembly C by using a pre-forming jig 10 prior to the step (S1). In this case, the step (S1) may be a step of additionally bending the foil tab T by pressing the foil tab T that has been pre-formed according to the step (S0).

The step (S0) may be performed by using the pre-forming jig 10 including a plurality of shutter blocks 11 disposed along a circumference of the outer circumferential portion of the electrode assembly C and bending the foil tab T by moving along a direction toward the winding center portion of the electrode assembly C. The step (S0) may be performed by using the pre-forming jig 10 having a plurality of shutter blocks 11 having a surface facing the foil tab T, the surface being inclined upward in a direction from the outer circumferential portion of the electrode assembly C toward the winding center portion. The step (S0) may be performed by using a pair of pre-forming jigs 10 disposed at both opposite ends of the electrode assembly C along the winding axis of the electrode assembly C. That is, the step (S0) may be a step of pre-forming each of the first foil tab (first polarity) and the second foil tab (second polarity) provided at both ends of the electrode assembly C in the height direction (parallel to the Z-axis). The pre-forming for the first foil tab and the pre-forming for the second foil tab may be performed at the same time or with a time interval.

The step (S1) may be performed by using the forming jig 20 having the width equal to or greater than the diameter of the electrode assembly C. The step (S1) may be performed by using the forming jig 20 configured to rotate based on the same axis as the winding axis of the electrode assembly C. The step (S1) may be performed by using the forming jig 20 configured such that an operation of pressing the foil tab T and an operation of rotating may be performed together. In the step (S1), the forming jig 20 may rotate in a clockwise direction so that the foil tab T is oriented in the clockwise direction. Alternatively, in the step (S1), the forming jig 20 may rotate in a counterclockwise direction so that the rotating foil tab T is oriented in the counterclockwise direction.

The step (S1) may be performed by using the forming jig 20 having the surface facing the foil tab T, the surface having the upward inclined shape along the direction from the outer circumferential portion of the electrode assembly C to the winding center portion. The step (S1) may be performed by using the forming jig 20 including the first pressing block 21 provided at the location corresponding to the first region of the foil tab T, the first region being relatively adjacent to the outer circumferential portion of the electrode assembly C, and the second pressing block 22 provided at the location corresponding to the second region of the foil tab T, the second region being relatively adjacent to the winding center of the electrode assembly C.

The step (S1) may be performed by the forming jig 20 in which the pressing surface of the first pressing block 21 and the pressing surface of the second pressing block 22 have the same inclination. The step (S1) may be performed by the forming jig 20 configured such that the first pressing block 21 and the second pressing block 22 are independently movable along the direction parallel to the winding axis of the electrode assembly C.

The step (S1) may include steps of: (S11) performing the primary pressing as the first pressing block 21 and the second pressing block 22 move towards the foil tab together while the pressing surface of the first pressing block 21 and the pressing surface of the second pressing block 22 form the same plane; and (S12) performing the secondary pressing as the second pressing block 22 further moves towards the foil tab T while the location of the first pressing block 21 is maintained, after the step (S11) is performed. Here, the lowest portion 22a of the second pressing block after the steps (S11) and (S12) are performed may be located at a height equal to or higher than the lowest portion 21a of the first pressing block 21. The step (S1) may be performed as the first pressing block 21 and the second pressing block 22 rotate independently or together based on the same axis as the winding axis.

Meanwhile, the step (S1) may be performed by the forming jig 30 including a first pressing block 31 provided at a location corresponding to a first region of the foil tab T, the first region being relatively adjacent to the outer circumferential portion of the electrode assembly C, a third pressing block 33 may be provided at a location corresponding to a third region of the foil tab T, the third region being relatively adjacent to the winding center portion of the electrode assembly C, and a second pressing block 32 provided at a location corresponding to a second region of the foil tab T, the second region being located between the first region and the third region. The step (S1) may be performed by the forming jig 20 in which the pressing surface of the first pressing block 31, the pressing surface of the second pressing block 32, and the pressing surface of the third pressing block 33 have approximately the same inclination. In this case, the step (S1) may include the steps of (S11) performing primary pressing as the first pressing block 31, the second pressing block 32 and the third pressing block 33 move together towards the foil tab T while the pressing surface of the first pressing block 31, the pressing surface of the second pressing block 32 and the pressing surface of the third pressing block 33 form the same plane; (S12) after the step (S11) is performed, performing secondary pressing as the second pressing block 32 and the third pressing block 33 move towards the foil tab T while the pressing surface of the second pressing block 32 and the pressing surface of the third pressing block 33 form the same plane and a location of the first pressing block 31 is maintained; and (S13) after the step (S12) is performed, performing tertiary pressing as the third pressing block 33 moves towards the foil tab T while a location of the first pressing block 31 and a location of the second pressing block 32 are maintained. The step (S1) may be performed by using a pair of forming jigs 20 disposed at both opposite ends of the electrode assembly C along the winding axis of the electrode assembly C. That is, the step (S1) may be a step of forming each of the first foil tab (first polarity) and the second foil tab (second polarity) provided at both ends of the electrode assembly C in the height direction (parallel to the Z-axis). In this case, the step (S1) may be performed by rotating the pair of forming jigs 20 in opposite directions based on the same axis as the winding axis of the electrode assembly C. The forming for the first foil tab and the forming for the second foil tab can be made at the same time or with a time interval.

As described above, according to the foil tab forming apparatus of the present disclosure and/or the foil tab forming method of the present disclosure, by dividing the foil tab T of the electrode assembly C into a plurality of regions along the approximately radial direction of the electrode assembly C and enabling each region to be intensive formed individually, efficient and accurate forming is possible. Moreover, according to the foil tab forming apparatus of the present disclosure and/or the foil tab forming method of the present disclosure, a method in which rotation and pressurization are made simultaneously may be applied, and thus forming may be performed more smoothly.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Explanation of Reference Numerals

C: electrode assembly
T: foil tab
P: current collection plate
10: pre-forming jig
11: shutter block
12: shutter frame
14: slot
16: guide member
20, 30: forming jig
21, 31: first pressing block
22, 32: second pressing block
33: third pressing block

## Claims

1. A foil tab (T) forming apparatus for forming a foil tab (T) of an electrode assembly (C) that includes an outer circumferential portion and a winding center portion defining a winding axis (Z), the foil tab (T) forming apparatus comprising:
a forming jig (20, 30) configured to press the foil tab (T) by moving along a direction parallel to the winding axis (Z) of the electrode assembly (C),
wherein the forming jig (20, 30) has a cylindrical shape,
wherein the forming jig (20, 30) has a surface facing the foil tab (T), the surface having an upward inclined shape along a direction from the outer circumferential portion of the electrode assembly (C) to the winding center portion, and
wherein the forming jig (20, 30) comprises:
a first pressing block (21, 31) provided at a location corresponding to a first region of the foil tab (T), the first region being relatively adjacent to the outer circumferential portion of the electrode assembly (C); and
a second pressing block (22, 32) provided at a location corresponding to a second region of the foil tab (T), the second region being relatively adjacent to the winding center of the electrode assembly (C),
wherein the first pressing block (21, 31) has a cylindrical shape having an empty center portion, and
wherein the second pressing block (22, 32) is disposed in the empty center portion of the first pressing block (21, 31).

2. The foil tab (T) forming apparatus of claim 1, further comprising a pre-forming jig (10) configured to bend the foil tab (T) by pressing the foil tab (T), while moving in a direction from the outer circumferential portion of the electrode assembly (C) to the winding center portion of the electrode assembly (C),
wherein the forming jig (20, 30) is configured to press the foil tab (T) that has been primarily bent by the pre-forming jig (10).

3. The foil tab (T) forming apparatus of claim 2, wherein the pre-forming jig (10) comprises a plurality of shutter blocks (11) disposed along a circumference of the outer circumferential portion of the electrode assembly (C) and bending the foil tab (T) by moving along a direction facing the winding center portion of the electrode assembly (C).

4. The foil tab (T) forming apparatus of claim 3, wherein the shutter block (11) has a surface facing the foil tab (T), the surface having an upward inclined shape along a direction from the outer circumferential portion of the electrode assembly (C) to the winding center portion.

5. The foil tab (T) forming apparatus of claim 1, wherein the forming jig (20, 30) has a width equal to or greater than a diameter of the electrode assembly (C).

6. The foil tab (T) forming apparatus of claim 1, wherein the forming jig (20, 30) is configured to rotate based on the same axis as the winding axis (Z) of the electrode assembly (C).

7. The foil tab (T) forming apparatus of claim 6, wherein the forming jig (20, 30) is configured to rotate in a clockwise direction or in a counterclockwise direction.

8. The foil tab (T) forming apparatus of claim 6, wherein the forming jig (20, 30) is configured to simultaneously perform an operation of pressing the foil tab (T) and an operation of rotating.

9. The foil tab (T) forming apparatus of claim 1, wherein a pressing surface of the first pressing block (21, 31) and a pressing surface of the second pressing block (22, 32) have the same inclination and define a surface of the forming jig (20, 30) facing the foil tab (T).

10. The foil tab (T) forming apparatus of claim 1, wherein the first pressing block (21, 31) and the second pressing block (22, 32) are configured to be independently movable along a direction parallel to the winding axis (Z) of the electrode assembly (C).

11. The foil tab (T) forming apparatus of claim 9, wherein the forming jig (20, 30) is configured to perform primary pressing as the first pressing block (21, 31) and the second pressing block (22, 32) move together towards the foil tab (T) while the pressing surface of the first pressing block (21, 31) and the pressing surface of the second pressing block (22, 32) form the same plane, and then perform secondary pressing as the second pressing block (22, 32) moves further towards the foil tab (T) while a location of the first pressing block (21, 31) is maintained.

12. The foil tab (T) forming apparatus of claim 11, wherein the forming jig (20, 30) is configured such that, after the primary pressing and the secondary pressing are completed, a lowest portion of the second pressing block (22, 32) is located at a height equal to or higher than a lowest portion of the first pressing block (21, 31).

13. The foil tab (T) forming apparatus of claim 1, wherein the first pressing block (21, 31) and the second pressing block (22, 32) are configured to rotate independently or together based on the same axis as the winding axis (Z).

14. The foil tab (T) forming apparatus of claim 1, wherein the forming jig (20, 30) comprises:
a first pressing block (21, 31) provided at a location corresponding to a first region of the foil tab (T), the first region being relatively adjacent to the outer circumferential portion of the electrode assembly (C);
a third pressing block (33) provided at a location corresponding to a third region of the foil tab (T), the third region being relatively adjacent to the winding center portion of the electrode assembly (C); and
a second pressing block (22, 32) provided at a location corresponding to a second region of the foil tab (T), the second region being located between the first region and the third region.

15. The foil tab (T) forming apparatus of claim 1, wherein the forming jig (20, 30) is provided as a pair of forming jigs (20, 30) disposed at both opposite ends of the electrode assembly (C) along the winding axis (Z) of the electrode assembly (C).

16. The foil tab (T) forming apparatus of claim 15, wherein the pair of forming jigs (20, 30) rotate in opposite directions based on the same axis as the winding axis (Z) of the electrode assembly (C).

17. The foil tab (T) forming apparatus of claim 2, wherein the pre-forming jig (10) is provided as a pair of pre-forming jigs (10) disposed at both opposite ends of the electrode assembly (C) along the winding axis (Z) of the electrode assembly (C).

## Patentansprüche

1. Vorrichtung zum Formen von Folienlaschen (T) einer Elektrodenanordnung (C), die einen äußeren Umfangsabschnitt und einen Wickelzentrumsabschnitt aufweist, der eine Wickelachse (Z) definiert, wobei die Vorrichtung zum Formen von Folienlaschen (T) umfasst:
eine Formvorrichtung (20, 30), die dazu konfiguriert ist, die Folienlaschen (T) durch Bewegung entlang einer Richtung parallel zur Wickelachse (Z) der Elektrodenanordnung (C) zu pressen,
wobei die Formvorrichtung (20, 30) eine zylindrische Form hat,
wobei die Formvorrichtung (20, 30) eine Oberfläche aufweist, die den Folienlaschen (T) zugewandt ist, wobei die Oberfläche eine nach oben geneigte Form entlang einer Richtung von dem äußeren Umfangsabschnitt der Elektrodenanordnung (C) zu dem Wickelzentrumsabschnitt aufweist, und
wobei die Formvorrichtung (20, 30) umfasst:
einen ersten Pressblock (21, 31), der an einer Stelle vorgesehen ist, die einem ersten Bereich der Folienlaschen (T) entspricht, wobei der erste Bereich relativ benachbart zu dem äußeren Umfangsabschnitt der Elektrodenanordnung (C) ist; und
einen zweiten Pressblock (22, 32), der an einer Stelle vorgesehen ist, die einem zweiten Bereich der Folienlaschen (T) entspricht, wobei der zweite Bereich relativ benachbart zum Wickelzentrum der Elektrodenanordnung (C) ist,
wobei der erste Pressblock (21, 31) eine zylindrische Form mit einem leeren Mittelteil aufweist, und
wobei der zweite Pressblock (22, 32) in dem leeren Mittelteil des ersten Pressblocks (21, 31) angeordnet ist.

2. Vorrichtung zum Formen von Folienlaschen (T) nach Anspruch 1, die ferner eine Vorformvorrichtung (10) umfasst, die dazu konfiguriert ist, die Folienlaschen (T) durch Pressen der Folienlaschen (T) zu biegen, während sie sich in einer Richtung von dem äußeren Umfangsabschnitt der Elektrodenanordnung (C) zu dem gewundenen Mittelabschnitt der Elektrodenanordnung (C) bewegt,
wobei die Formvorrichtung (20, 30) dazu konfiguriert ist, die Folienlaschen (T) zu pressen, die primär durch die Vorformvorrichtung (10) gebogen wurde.

3. Vorrichtung zum Formen von Folienlaschen (T) nach Anspruch 2, wobei die Vorformvorrichtung (10) eine Vielzahl von Blendenblöcken (11) umfasst, die entlang eines Umfangs des äußeren Umfangsabschnitts der Elektrodenbaugruppe (C) angeordnet sind und die Folienlaschen (T) biegen, indem sie sich entlang einer Richtung auf den Wickelzentrumsabschnitt der Elektrodenbaugruppe (C) bewegt.

4. Vorrichtung zum Formen von Folienlaschen (T) nach Anspruch 3, wobei der Blendenblock (11) eine Oberfläche aufweist, die dem Folienlaschen (T) zugewandt ist, wobei die Oberfläche eine nach oben geneigte Form entlang einer Richtung von dem äußeren Umfangsabschnitt der Elektrodenanordnung (C) zu dem Wickelzentrumsabschnitt aufweist.

5. Vorrichtung zum Formen von Folienlaschen (T) nach Anspruch 1, wobei die Formvorrichtung (20, 30) eine Breite hat, die größer oder gleich dem Durchmesser der Elektrodenanordnung (C) ist.

6. Die Vorrichtung zum Formen von Folienlaschen (T) nach Anspruch 1, wobei die Formvorrichtung (20, 30) dazu konfiguriert ist, sich um dieselbe Achse wie die Wickelachse (Z) der Elektrodenanordnung (C) zu drehen.

7. Vorrichtung zum Formen von Folienlaschen (T) nach Anspruch 6, wobei die Formvorrichtung (20, 30) dazu konfiguriert, sich im Uhrzeigersinn oder gegen den Uhrzeigersinn zu drehen.

8. Vorrichtung zum Formen von Folienlaschen (T) nach Anspruch 6, wobei die Formvorrichtung (20, 30) dazu konfiguriert ist, einen Vorgang des Pressens der Folienlaschen (T) und einen Vorgang des Drehens gleichzeitig durchzuführen.

9. Vorrichtung zum Formen von Folienlaschen (T) nach Anspruch 1, wobei eine Pressfläche des ersten Pressblocks (21, 31) und eine Pressfläche des zweiten Pressblocks (22, 32) die gleiche Neigung aufweisen und eine den Folienlaschen (T) zugewandte Fläche der Formvorrichtung (20, 30) definieren.

10. Vorrichtung zum Formen von Folienlaschen (T) nach Anspruch 1, wobei der erste Pressblock (21, 31) und der zweite Pressblock (22, 32) so konfiguriert sind, dass sie unabhängig voneinander entlang einer Richtung parallel zur Wickelachse (Z) der Elektrodenanordnung (C) beweglich sind.

11. Vorrichtung zum Formen von Folienlaschen (T) nach Anspruch 9, wobei die Formvorrichtung (20, 30) dazu konfiguriert ist, ein primäres Pressen durchzuführen, wenn sich der erste Pressblock (21, 31) und der zweite Pressblock (22, 32) zusammen in Richtung der Folienlaschen (T) bewegen, während die Pressfläche des ersten Pressblocks (21, 31) und die Pressfläche des zweiten Pressblocks (22, 32) die gleiche Ebene bilden, und dann ein sekundäres Pressen durchführt, wenn sich der zweite Pressblock (22, 32) weiter in Richtung der Folienlaschen (T) bewegt, während eine Position des ersten Pressblocks (21, 31) beibehalten wird.

12. Vorrichtung zum Formen von Folienlaschen (T) nach Anspruch 11, wobei die Formvorrichtung (20, 30) dazu konfiguriert ist, nach Abschluss des primären Pressens und des sekundären Pressens einen untersten Abschnitt des zweiten Pressblocks (22, 32) in einer Höhe anzuordnen, die gleich oder höher als ein unterster Abschnitt des ersten Pressblocks (21, 31) ist.

13. Vorrichtung zum Formen von Folienlaschen (T) nach Anspruch 1, wobei der erste Pressblock (21, 31) und der zweite Pressblock (22, 32) so konfiguriert sind, dass sie sich unabhängig oder zusammen auf der gleichen Achse wie die Wickelachse (Z) drehen.

14. Vorrichtung zum Formen von Folienlaschen (T) nach Anspruch 1, wobei die Formvorrichtung (20, 30) umfasst
einen ersten Pressblock (21, 31), der an einer Stelle vorgesehen ist, die einem ersten Bereich der Folienlasche (T) entspricht, wobei der erste Bereich relativ nahe zu dem äußeren Umfangsabschnitt der Elektrodenanordnung (C) ist;
einen dritten Pressblock (33), der an einer Stelle vorgesehen ist, die einem dritten Bereich der Folienlasche (T) entspricht, wobei der dritte Bereich relativ nahe zu dem Wickelzentrumsabschnitt der Elektrodenanordnung (C) ist; und
einen zweiten Pressblock (22, 32), der an einer Stelle vorgesehen ist, die einem zweiten Bereich der Folienlasche (T) entspricht, wobei der zweite Bereich zwischen dem ersten Bereich und dem dritten Bereich angeordnet ist.

15. Vorrichtung zum Formen von Folienlaschen (T) nach Anspruch 1, wobei die Formvorrichtung (20, 30) als ein Paar von Formvorrichtungen (20, 30) vorgesehen ist, die an beiden gegenüberliegenden Enden der Elektrodenanordnung (C) entlang der Wickelsachse (Z) der Elektrodenanordnung (C) angeordnet sind.

16. Vorrichtung zum Formen von Folienlaschen (T) nach Anspruch 15, wobei sich das Paar von Formvorrichtungen (20, 30) in entgegengesetzten Richtungen um die gleiche Achse wie die Wickelachse (Z) der Elektrodenanordnung (C) dreht.

17. Vorrichtung zum Formen von Folienlaschen (T) nach Anspruch 2, wobei die Vorformvorrichtung (10) als ein Paar von Vorformvorrichtung en (10) vorgesehen ist, die an beiden entlang der Wickelachse (Z) der Elektrodenanordnung (C) gegenüberliegenden Enden der Elektrodenanordnung (C) angeordnet sind.

## Revendications

1. Appareil de formation d'une languette en feuille d'aluminium (T) pour former une languette en feuille d'aluminium (T) d'un ensemble d'électrode (C) comprenant une partie circonférentielle extérieure et une partie centrale d'enroulement définissant un axe d'enroulement (Z), l'appareil de formation d'une languette en feuille d'aluminium (T) comprenant :
un gabarit de formation (20, 30) configuré pour appuyer sur la languette en feuille d'aluminium (T) en se déplaçant dans une direction parallèle à l'axe d'enroulement (Z) de l'ensemble d'électrode (C),
le gabarit de formation (20, 30) ayant une forme cylindrique,
le gabarit de formation (20, 30) possédant une surface faisant face à la languette en feuille d'aluminium (T), la surface ayant une forme inclinée vers le haut dans une direction allant de la partie circonférentielle extérieure de l'ensemble d'électrode (C) à la partie centrale de l'enroulement, et
le gabarit de formation (20, 30) comprenant :
un premier bloc de pressage (21, 31) agencé dans un emplacement correspondant à une première zone de la languette en feuille d'aluminium (T), la première zone étant relativement adjacente à la partie circonférentielle extérieure de l'ensemble d'électrode (C) ; et
un deuxième bloc de pressage (22, 32) agencé dans un emplacement correspondant à une deuxième zone de la languette en feuille d'aluminium (T), la deuxième zone étant relativement adjacente au centre d'enroulement de l'ensemble d'électrode (C),
le premier bloc de pressage (21, 31) ayant une forme cylindrique avec une partie centrale vide, et
le deuxième bloc de pressage (22, 32) étant disposé dans la partie centrale vide du premier bloc de pressage (21, 31)

2. Appareil de formage de languette en feuille d'aluminium (T) selon la revendication 1, comprenant en outre un gabarit de préformage (10) configuré pour plier la languette en feuille d'aluminium (T) en appuyant sur la languette en feuille d'aluminium (T), tout en se déplaçant dans une direction allant de la partie circonférentielle extérieure de l'ensemble d'électrode (C) à la partie centrale d'enroulement de l'ensemble d'électrode (C),
le gabarit de formation (20, 30) étant configuré pour appuyer sur la languette en feuille d'aluminium (T) qui a été préalablement pliée par le gabarit de préformation (10).

3. Dispositif de formation de languette en feuille d'aluminium (T) selon la revendication 2, le gabarit de préformation (10) comprenant une pluralité de blocs obturateurs (11) disposés le long d'une circonférence de la partie circonférentielle extérieure de l'ensemble d'électrode (C), et pliant la languette en feuille d'aluminium (T) en se déplaçant dans une direction faisant face à la partie centrale d'enroulement de l'ensemble d'électrode (C).

4. Dispositif de formation de languette en feuille d'aluminium (T) selon la revendication 3, le bloc obturateur (11) possédant une surface faisant face à la languette en feuille d'aluminium (T), la surface ayant une forme inclinée vers le haut dans une direction allant de la partie circonférentielle extérieure de l'ensemble d'électrode (C) à la partie centrale d'enroulement.

5. Appareil de formation de languette en feuille d'aluminium (T) selon la revendication 1, la largeur du gabarit de formation (20, 30) étant égale ou supérieure à un diamètre de l'ensemble d'électrode (C).

6. Appareil de formation de languette en feuille d'aluminium (T) selon la revendication 1, le gabarit de formation (20, 30) est configuré pour tourner d'après le même axe que l'axe d'enroulement (Z) de l'ensemble d'électrode (C).

7. Appareil de formation de languette en feuille d'aluminium (T) selon la revendication 6, le gabarit de formation (20, 30) étant configuré pour tourner dans le sens horaire ou le sens antihoraire.

8. Appareil de formation de languette en feuille d'aluminium (T) selon la revendication 6, le gabarit de formation (20, 30) étant configuré pour effectuer simultanément une opération de pressage de la languette en feuille d'aluminium (T) et une opération de rotation.

9. Appareil de formage de languette en feuille d'aluminium (T) selon la revendication 1, une surface de pression du premier bloc de pressage (21, 31) et une surface de pression du deuxième bloc de pressage (22, 32) présentant le même angle d'inclinaison, et définissent une surface du gabarit de formation (20, 30) faisant face à la languette en feuille d'aluminium (T).

10. Appareil de formation de languette en feuille d'aluminium (T) selon la revendication 1, le premier bloc de pressage (21, 31) et le deuxième bloc de pressage (22, 32) étant configurés pour pouvoir se déplacer indépendamment dans une direction parallèle à l'axe d'enroulement (Z) de l'ensemble électrode (C).

11. Appareil de formation de languette en feuille d'aluminium (T) selon la revendication 9, le gabarit de formation (20, 30) étant configuré pour effectuer un pressage primaire lorsque le premier bloc de pressage (21, 31) et le deuxième bloc de pressage (22, 32) se déplacent ensemble vers la languette en feuille d'aluminium (T), tandis que la surface de pressage du premier bloc de pressage (21, 31) et la surface de pressage du deuxième bloc de pressage (22, 32) forment le même plan, puis effectuent un pressage secondaire alors que le deuxième bloc de pressage (22, 32) se déplace davantage vers la languette de la feuille (T) tout en maintenant un emplacement du premier bloc de pressage (21, 31).

12. Appareil de formation de languette en feuille d'aluminium (T) selon la revendication 11, le gabarit de formage (20, 30) étant configuré de sorte que lorsque le pressage primaire et le pressage secondaire sont achevés, une partie inférieure du deuxième bloc de pressage (22, 32) se situe à une hauteur égale ou supérieure à une partie inférieure du premier bloc de pressage (21, 31).

13. Appareil de formation de languette en feuille d'aluminium (T) selon la revendication 1, le premier bloc de pressage (21, 31) et le deuxième bloc de pressage (22, 32) étant configurés pour tourner indépendamment ou ensemble d'après le même que l'axe d'enroulement (Z).

14. Dispositif de formation de languette en feuille d'aluminium (T) selon la revendication 1, le gabarit de formation (20, 30) comprenant :
un premier bloc de pressage (21, 31) agencé dans un emplacement correspondant à une première zone de la languette en feuille d'aluminium (T), la première zone étant relativement adjacente à la partie circonférentielle extérieure de l'ensemble d'électrode (C) ;
un troisième bloc de pressage (33) agencé dans un emplacement correspondant à une troisième zone de la languette en feuille d'aluminium (T), la troisième zone étant relativement adjacente au centre d'enroulement de l'ensemble d'électrode (C); et
un deuxième bloc de pressage (22, 32) agencé dans un emplacement correspondant à une deuxième zone de la languette en feuille d'aluminium (T), la deuxième zone étant située entre la première zone et la troisième zone.

15. Appareil de formation de languette en feuille d'aluminium (T) selon la revendication 1, le gabarit de formation (20, 30) étant agencé sous forme d'une paire de gabarits de formation (20, 30) disposés aux deux extrémités opposées de l'ensemble d'électrode (C) le long de l'axe d'enroulement (Z) de l'ensemble d'électrode (C).

16. Appareil de formation de languette en feuille d'aluminium (T) selon la revendication 15, la paire de gabarits de formation (20, 30) étant configurée pour tourner dans des directions opposées d'après le même axe que l'axe d'enroulement (Z) de l'ensemble d'électrode (C).

17. Appareil de formation de languette en feuille d'aluminium (T) selon la revendication 2, le gabarit de préformation (10) étant agencé sous forme d'une paire de gabarits de préformation (10) disposés aux deux extrémités opposées de l'ensemble d'électrode (C) le long de l'axe d'enroulement (Z) de l'ensemble d'électrode (C).
